# EUROPÄISCHE PATENTSCHRIFT

(11) **EP 2 033 831 B1**
(45) Veröffentlichungstag und Bekanntmachung des Hinweises auf die Patenterteilung: **07.07.2010**
(21) Anmeldenummer: 08090002.0
(22) Anmeldetag: 28.08.2008
(51) Int. Cl.: B60K 35/00, B60K 37/02

(54) **Anzeigeeinheit für Kraftfahrzeug und Verfahren zur Ansteuerung einer Anzeigeeinheit**
Display unit for motor vehicle and method for controlling a display unit
Unité d'affichage pour véhicule automobile et procédé de commande d'une unité d'affichage

(30) Priorität: 06.09.2007 DE 10742294
(43) Veröffentlichungstag der Anmeldung: 11.03.2009
(73) Patentinhaber: VOLKSWAGEN AG, 38436 Wolfsburg (DE)
(72) Erfinder: Hauschild, Frank, 10587 Berlin (DE); Kuhn, Mathias, 14109 Berlin (DE); Dehmann, Rainer, 10963 Berlin (DE); Wagner, Volkmar, 10965 Berlin (DE); Hofmann, Gustav, 38114 Braunschweig (DE)
(74) Vertreter: Patentanwälte Bressel und Partner

(56) Entgegenhaltungen:
- EP-A- 1 080 976
- EP-A- 1 582 393
- EP-A- 1 754 622
- US-A1- 2002 085 043

## Beschreibung

Die Erfindung betrifft eine Anzeigeeinheit für ein Kraftfahrzeug und ein Verfahren zur Ansteuerung einer Anzeigeeinheit.

Aus der DE 39 16 467 A1 ist ein Verfahren zum Anzeigen des Schadstoffausstoßes einer Brennkraftmaschine in einem Kraftfahrzeug bekannt, mit einem im Kraftfahrzeug montierten Anzeigegerät, welches ständig den momentanen Schadstoffausstoß anzeigt, wobei der Schadstoffausstoß der Brennkraftmaschine über Last- und Drehzahl auf einem Prüfstand ermittelt und in einem Kennfeld abgelegt wird, die über Last- und Drehzahl-Sensoren an der Brennkraftmaschine im Kraftfahrzeug ermittelten Werte mit dem Kennfeld verglichen werden, die korrespondierenden Schadstoffwerte ausgelesen und am Anzeigegerät angezeigt werden.

Aus der EP 1 548 242 A1 ist ein Verfahren und eine Vorrichtung zur Anzeige von Emissionen eines Kraftfahrzeuges wie beispielsweise CO₂, NOₓ, SOₓ oder Kohlenwasserstoff bekannt, die mittels eines Sensors erfasst werden und auf einem Display angezeigt werden. Dabei werden die Werte der Emissionen über ein gewichtetes Punktesystem dargestellt. Vorzugsweise werden die Werte im Vergleich zu einem Standard-Wert dargestellt. Dies kann beispielsweise auch in Form von Balkendiagrammen erfolgen. Der Standardwert kann auf eine Zeit oder Fahrleistung bezogen werden und wird vorzugsweise vom Kraftfahrzeughersteller ermittelt und in einem Speicher abgelegt.

Die EP 1 080 976 A zeigt eine Anzeigeeinheit nach dem Oberbegriff des Anspruchs 1.

Der Erfindung liegt das technische Problem zugrunde, eine Anzeigeeinheit für ein Kraftfahrzeug sowie ein Verfahren zur Ansteuerung einer Anzeigeeinheit zu schaffen, mittels derer der Kraftfahrzeugführer über verschiedene Informationen gleichzeitig informiert wird, wobei der Kraftfahrzeugführer einfacher Details zu den einzelnen Informationen aufrufen kann.

Die Lösung des technischen Problems ergibt sich durch die Gegenstände mit den Merkmalen der Patentansprüche 1 und 10. Weitere vorteilhafte Ausgestaltungen der Erfindung ergeben sich aus den Unteransprüchen.

Hierzu umfasst die Anzeigeeinheit für ein Kraftfahrzeug einen zentralen Anzeigebereich sowie mindestens einen weiteren Nebenbereich, wobei im zentralen Anzeigebereich und im Nebenbereich unabhängige Informationen darstellbar sind, wobei der Anzeigeeinheit mindestens ein Eingabemittel zugeordnet ist, wobei im zentralen Anzeigebereich die Informationen mit einer größeren Informationstiefe dargestellt sind als die Informationen im Nebenbereich, wobei durch das mindestens eine Eingabemittel die Informationen vom Nebenbereich in den zentralen Anzeigebereich verschiebbar sind, wo diese dann mit einer größeren Informationstiefe dargestellt sind, wobei die zuvor im zentralen Anzeigebereich dargestellten Informationen in den oder einen andere Nebenbereich verschoben werden, wo diese mit einer geringeren Informationstiefe dargestellt sind. Hierdurch kann der Kraftfahrzeugführer oder ein anderer Nutzer durch eine Interaktion einfach bedarfsweise die Informationstiefe für eine gewünschte Information ändern, ohne sich durch Menüstrukturen zu arbeiten. Die Informationen können dabei neben reinen Informationen auch Eingabeoptionen enthalten. Unter Informationstiefe wird dabei allgemein der Detaillierungsgrad der Informationen verstanden. Der zentrale Anzeigebereich ist vorzugsweise mittig auf der Anzeigeeinheit angeordnet, kann aber auch exzentrisch angeordnet sein. Der zentrale Anzeigebereich und der oder die Nebenbereiche können nebeneinander liegen und sich berühren, gegebenenfalls sogar überlappen, oder aber diese sind voneinander beabstandet. Die Aussage "unabhängige Informationen" ist derart zu verstehen, dass die Informationen unterschiedlich sind. Dies schließt nicht aus, dass die Informationen korrelieren, wie beispielsweise der Kraftstoffverbrauch und die CO₂-Emission.

Von mindestens einer Information ist die größere Informationstiefe im zentralen Anzeigebereich eine zeitlich aufgelöste Darstellung einer Messgröße und die geringere Informationstiefe im Nebenbereich eine Darstellung eines Momentanwertes.

Mindestens eine Information sind Emissionswerte eines Kraftfahrzeuges und/oder Verbrauchs- und/oder Reichweitedaten. Die Emissionswerte können beispielsweise der CO₂-, NOₓ-, SOₓ- und/oder Kohlenwasserstoffausstoß sein. Die Verbrauchs- und/oder Reichweitendaten werden vorzugsweise als eine Information dargestellt, wobei die Verbrauchsdaten die größere Informationstiefe darstellen, wobei die verbleibende Reichweite die geringere Informationstiefe darstellt.

In einer bevorzugten Ausführungsform sind mindestens eine der Informationen Daten eines Navigationssystems, wobei die Daten im zentralen Anzeigebereich als digitale Straßenkarte dargestellt sind und im Nebenbereich nur piktogrammförmig und/oder alphanumerisch die nächste Fahrtrichtungsänderung angezeigt ist.

In einer weiteren bevorzugten Ausführungsform erfolgt die Darstellung im zentralen Anzeigebebereich grafisch. Insbesondere bei den Emissionen und dem Verbrauch erhält der Kraftfahrzeugführer durch die zeitlich aufgelöste grafische Darstellung einen besseren Überblick, insbesondere wie sein Fahrstil mit den Emissionen bzw. dem Verbrauch korreliert. Des Weiteren kann der Kraftfahrzeugführer über den zeitlichen Verlauf auch besser verfolgen, wie sich Änderungen im Fahrstil oder auch andere Kraftstoffe sich auf die Emissionen auswirken. Die Darstellung des zeitlichen Verlaufs kann allgemein auch derart erfolgen, dass die Fahrleistung zeitlich aufgelöst wird, beispielsweise also alle 1 bis 2 km ein Wert für die Emission oder den Verbrauch aufgetragen wird. In diesem Fall kann der zeitliche Abstand zwischen zwei Werten in der Darstellung variieren.

Vorzugsweise ist der vorgegebene Zeitraum einstellbar. Hierdurch kann der Kraftfahrzeugführer bedarfsweise kurze Zeiträume mit hoher Auflösung oder lange Zeiträume mit geringer Auflösung auswählen. Mit letzterem kann beispielsweise ein Langzeitverhalten der Emission dargestellt werden, wobei bei kurzen Zeiträumen beispielsweise die Emission bei einer bestimmten Fahrroute dargestellt wird. Dabei ist es auch möglich, an der grafischen Darstellung konkrete Zeitpunkte bzw. Uhrzeiten anzugeben und/oder Orientierungspunkte einer digitalen Straßenkarte, um die Zuordnung der Emission zu bestimmten Fahrsituationen zu verbessern. Dabei sei noch einmal erwähnt, dass der Zeitraum auch durch eine Fahrleistung in Kilometer angegeben sein kann, der dann ebenfalls einstellbar ist.

In einer weiteren bevorzugten Ausführungsform wird der zeitliche Verlauf der Emission durch eine Aneinanderreihung von Balken als Balkendiagramm dargestellt, was einen etwas plastischeren Eindruck von den Emissionen erzeugt als eine analoge kontinuierliche Darstellung.

In einer weiteren bevorzugten Ausführungsform wird der zeitliche Verlauf der Emission grafisch dargestellt, wobei ein fahrzeugtypischer Mittelwert grafisch als Referenz dargestellt ist. Der Mittelwert kann dabei als ein diskreter Wert oder als Balken dargestellt sein, der einen Durchschnittsbereich symbolisiert. Es ist auch denkbar, dass die Referenz fahrsituationsspezifisch veränderbar ist. Beispielsweise kann die Referenz bei sehr niedrigen Außentemperaturen höher sein, da dann auch üblicherweise der Kraftstoffverbrauch höher ist.

Beim Kraftstoffverbrauch kann zwar prinzipiell auch ein fahrzeugtypischer Mittelwert grafisch als Referenz dargestellt werden, vorzugsweise wird jedoch der tatsächliche durchschnittliche Verbrauch grafisch als Referenz dargestellt.

In einer weiteren bevorzugten Ausführungsform wird zusätzlich zur zeitlichen Darstellung ein Minimal- und/oder Maximal- und/oder Durchschnittswert der Emission und/oder des Verbrauchs im Zeitraum der Darstellung numerisch dargestellt.

In einer weiteren bevorzugten Ausführungsform weist die Verschiebung der Information von einem Nebenbereich in den zentralen Anzeigebereich und umgekehrt einen räumlichen Eindruck auf. Beispielsweise wirkt die Verschiebung optisch so, als seien die verschiedenen Darstellungen auf einer gemeinsamen Leiste oder Kugel, die dann jeweils hineingeschoben oder hineingedreht werden.

In einer weiteren bevorzugten Ausführungsform ist die Anzeigeeinheit Bestandteil eines Kombiinstrumentes. Weiter vorzugsweise wird dann auf der Anzeigeeinheit ein Tachometer dargestellt oder aber ein Tachometer-Bauteil ist in die Anzeigeeinheit integriert. Vorzugsweise liegt dann der zentrale Anzeigebereich im Innern des Tachometers, wobei das Tachometer der zentrale Anzeigebereich von dem oder den Nebenbereichen trennt.

In einer weiteren bevorzugten Ausführungsform ist das Eingabemittel als Schaltmittel ausgebildet, das vorzugsweise am Lenkrad angeordnet ist. Das Schaltmittel kann beispielsweise ein Tastschalter, Wippschalter, Drehknopf oder als Walze ausgebildet sein.

Alternativ oder zusätzlich ist das Eingabemittel als Spracherkennungseinrichtung ausgebildet.

In einer weiteren bevorzugten Ausführungsform ist die Anzeigeeinheit als Touch-Screen ausgebildet, so dass beispielsweise mittels einer Verschiebung eines Fingers vor oder auf der Anzeigeeinheit die Informationen verschoben werden.

Es sei angemerkt, dass sämtliche Ausführungen zur Anzeigeeinheit sich auch auf das parallel beanspruchte Verfahren beziehen.

Die Erfindung wird nachfolgend anhand eines bevorzugten Ausführungsbeispieles näher erläutert. Die Fig. zeigen:
- Fig. 1: eine Darstellung einer Anzeigeeinheit mit CO₂-Emissionswerten im zentralen Anzeigebereich,
- Fig. 2: eine Darstellung der Anzeigeeinheit mit Verbrauchswerten im zentralen Anzeigebereich,
- Fig. 3: eine Darstellung der Anzeigeeinheit mit Navigationsdaten im zentralen Anzeigebereich und
- Fig. 4a, b: verschiedene Darstellungen der Emissionswerte von CO₂ als Momentanwert im Nebenbereich.

Die Anzeigeeinheit 1 umfasst ein Display, das in vier Anzeigebereiche 2, 3, 4, 5 unterteilt ist. Der erste Anzeigebereich 2 dient zur Darstellung bzw. Anordnung eines Tachometers. Die Anzeigeeinheit 1 kann dabei digital ein Tachometer nachbilden oder aber ein Tachometer-Bauelement ist in die Anzeigeeinheit 1 integriert. Im ersten Fall kann dann die Anzeigeeinheit 1 als ein monolithisches Display ausgebildet sein. Innerhalb des Tachometers ist ein zweiter, zentraler Anzeigebereich 3 angeordnet. Dieser zweite Anzeigebereich 3 ist vorzugsweise nicht überlappend mit dem ersten sowie dritten und vierten Anzeigebereich 2, 4, 5 ausgebildet. In dem dritten Anzeigebereich 4 und dem vierten Anzeigebereich 5 sind weitere Informationen dargestellt. Der dritte und vierte Anzeigebereich 4, 5 stellen dabei Nebenbereiche zum zweiten, zentralen Anzeigebereich 3 dar. Im dritten Anzeigebereich 4, der links seitlich neben dem Tachometer angeordnet ist, ist ein piktogrammförmiger Pfeil als Hinweiselement für eine Fahrtrichtungsänderung eines Navigationssystems dargestellt. Der dritte Anzeigebereich 4 kann sich dabei um bis zu 180° um den Tachometer schmiegen. Im vierten Anzeigebereich 5 ist eine symbolhafte Darstellung für die Tankreichweite dargestellt. Im dargestellten Beispiel besteht die Darstellung aus unterschiedlichen farbigen Quadraten, wobei die Größe der Quadrate und/oder die Farbe sich in Abhängigkeit der Tankreichweite verändert. Auch der vierte Anzeigebereich 5 kann sich um bis zu 180° um den Tachometer schmiegen, so dass im Extremfall der dritte und vierte Anzeigebereich 4, 5 aneinander stoßen. Üblicherweise aber sind der dritte und vierte Anzeigebereich 4, 5 begrenzt, so dass der Anzeigeplatz in den Ecken der Anzeigeeinheit für weitere Informationen genutzt werden kann. Wie ersichtlich, können in dem dritten und vierten Anzeigebereich 4, 5 zusätzliche alphanumerische Angaben angezeigt werden.

Im zweiten Anzeigebereich 3 ist die Emission von CO₂ für einen vorgegebenen Zeitraum grafisch in Form einer Aneinanderreihung von Balken 6 als Balkendiagramm dargestellt. Die Höhe der Balken 6 ist dabei proportional zur Menge der Emission. Die Breite der Balken 6 entspricht einer Zeit oder einer Fahrleistung in km. Nachfolgend sei angenommen, dass die Breite eines Balkens 6 5 km Fahrleistung entspricht. Da achtzehn Balken 6 dargestellt sind, ergibt sich somit ein zeitlicher Verlauf der Emission von CO₂ über 90 km Fahrleistung. Senkrecht zu Balken 6 ist ein Balken 7 dargestellt, der einen fahrzeugtypischen Mittelwert bzw. Mittelwertbereich für die CO₂-Emission darstellt. Beispielsweise liegt der Mittelwerbereich bei 90 - 100 g/km. Vorzugsweise ist dabei der Balken 7 andersfarbig als die Balken 6 dargestellt. Unter den Balken 6 sind alphanumerisch ein Minimalwert für die Emission, ein Durchschnittswert und ein Maximalwert für den dargestellten Zeitraum bzw. die dargestellte Fahrleistung dargestellt. Im dargestellten Beispiel beträgt der Minimalwert 85 g/km, der durchschnittliche Wert 92 g/km und der Maximalwert 120 g/km. Bedarfsweise können an den Balken 6 und/oder 7 weitere numerische Angaben über die Emission dargestellt sein.

Zur Darstellung auf der Anzeigeeinheit ist diese mit einer nicht dargestellten Auswerte- und Steuereinheit verbunden, die vorzugsweise über ein Bussystem die Daten von verschiedenen Sensoren wie beispielsweise einem CO₂-Sensor, einem Kraftstoff-Füllstandssensor, einem Wegsensor einem Zeit-Sensor und einem Navigationssystem erhält. Aus diesen Daten berechnet die Auswerte- und Steuereinheit die darzustellenden Größen. Dabei sind vorzugsweise dort auch die Werte für den fahrzeugtypischen Mittelwert und der vorgegebene Zeitraum bzw. die vorgegebene Fahrleistung abgelegt. Des Weiteren werden dort auch die CO₂-Werte und Verbrauchswerte zwischengespeichert, um den zeitlichen Verlauf darzustellen. Die von der Auswerte- und Steuereinheit aufbereiteten Daten dienen dann zur Ansteuerung der Anzeigeeinheit 1, die vorzugsweise als freiprogrammierbares digitales Display ausgebildet ist.

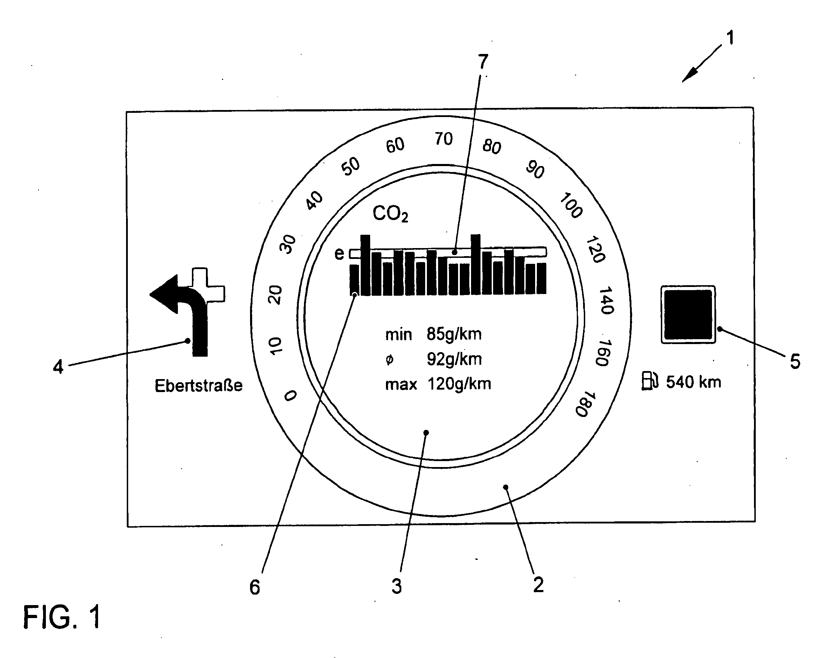

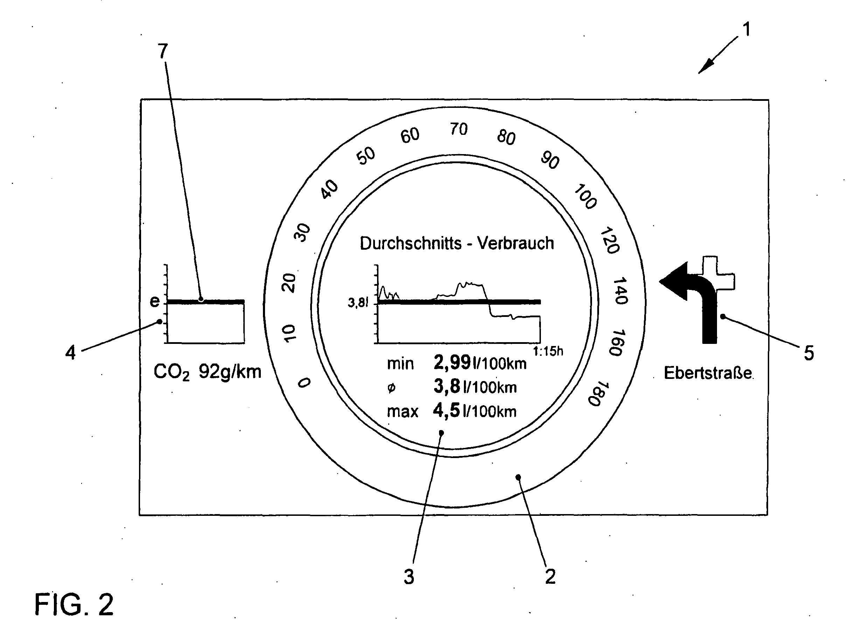

Möchte nun der Kraftfahrzeugführer zu den Verbrauchsdaten eine größere Informationstiefe angeboten bekommen, so betätigt dieser ein nicht dargestelltes Eingabemittel, beispielsweise indem dieser auf die linke Seite eines Wippschalters drückt. Hierdurch werden die Verbrauchs-/Reichweitedaten vom vierten Anzeigebereich 5 als Nebenbereich in den zweiten, zentralen Anzeigebereich 3 verschoben. Gleichzeitig werden die Emissionsdaten vom zentralen Anzeigebereich 3 in den dritten Anzeigebereich 4 als Nebenbereich verschoben. Die zuvor dort dargestellten Navigationsdaten werden im vierten Anzeigebereich 5 als Nebenbereich dargestellt. Das Ergebnis dieser Verschiebung ist in Fig. 2 dargestellt. Im zentralen Anzeigebereich 3 ist nun der Verbrauch pro 100 km grafisch als Kurve über der Zeit dargestellt. Unterhalb der grafischen Darstellung sind ein Minimalwert, ein Durchschnittswert und ein Maximalwert für den Verbrauch in Litern pro 100 km im dargestellten Zeitraum alphanumerisch dargestellt. In die Grafik ist zusätzlich der Durchschnittswert für den Verbrauch als waagerechter Balken eingezeichnet, im vorliegenden Fall 3,8 I/100 km. Die Darstellung der Navigationsdaten im vierten Anzeigebereich 5 entspricht der Darstellung gemäß Fig. 1. Im dritten Anzeigebereich 4 ist nur noch ein Momentanwert für den CO₂-Emissionswert dargestellt, wobei der Grafik zu entnehmen ist, dass die aktuelle Emission von 92 g/km noch im fahrzeugtypischen Durchschnittsbereich liegt. Vorzugsweise ist die Farbe bzw. Darstellung des Balkens 7 derart gewählt, dass der waagerechte Strich für die aktuelle CO₂-Emission im Balken 7 erkennbar ist, so dass auch entnehmbar ist, wo im Durchschnittsbereich der aktuelle Wert liegt.

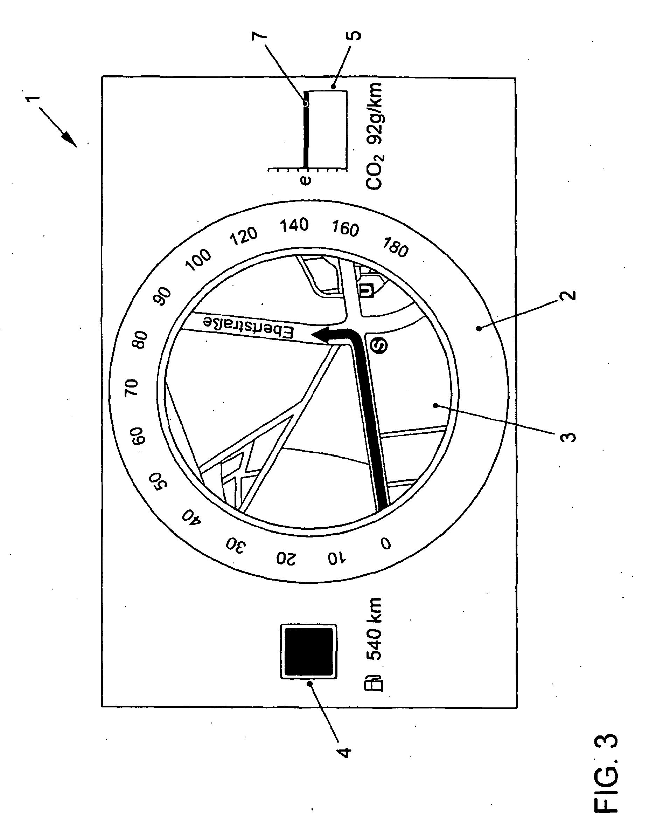

In der Fig. 3 ist die Anzeigeeinheit 1 dargestellt, nachdem der Nutzer ausgehend von der Darstellung gemäß Fig. 1 die Informationen nach rechts verschiebt. Hierdurch verschiebt sich die Darstellung der Navigationsdaten vom dritten Anzeigebereich 4 in den zentralen Anzeigebereich 3, wohingegen die Emissionswerte vom zentralen Anzeigebereich 3 in den vierten Anzeigebereich 5 verschoben werden. Die Reichweitedaten, die zuvor im vierten Anzeigebereich 5 standen (siehe Fig. 1), sind dann in den dritten Anzeigebereich 4 verschoben worden, wobei die Darstellung unverändert geblieben ist. Hinsichtlich der Darstellung der Emissionswerte als Momentanwert im vierten Anzeigebereich 5 kann auf die Ausführungen zu Fig. 2 verwiesen werden. Die Navigationsdaten im zentralen Anzeigebereich werden dann als digitale Straßenkarte mit Fahrtrichtungshinweisen dargestellt.

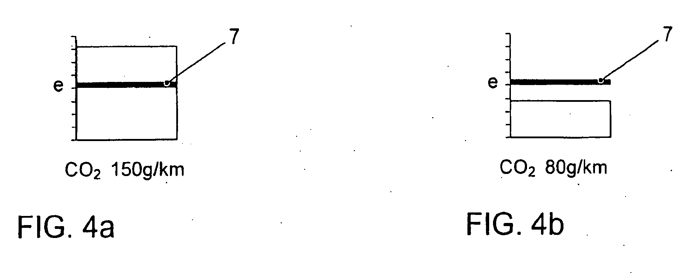

In der Fig. 4a und Fig. 4b sind jeweils beispielhaft Momentanwerte für die CO₂-Emission dargestellt, wobei in Fig. 4a eine Situation dargestellt ist, wo der Momentanwert von 150 g/km den fahrzeugtypischen Durchschnittsbereich deutlich überschreitet. In der Fig. 4b ist ein Momentanwert von 80 g/km dargestellt, der deutlich unter dem Durchschnittsbereich liegt, wobei die Durchschnittsbereiche jeweils vorzugsweise durch den andersfarbigen Balken 7 dargestellt sind.

## Patentansprüche

1. Anzeigeeinheit 1 für ein Kraftfahrzeug, umfassend einen zentralen Anzeigebereich 3 sowie mindestens einen weiteren Nebenbereich 4, 5, wobei im zentralen Anzeigebereich 3 und im Nebenbereich 4, 5 voneinander unabhängige Informationen darstellbar sind, wobei der Anzeigeeinheit 1 mindestens ein Eingabemittel zugeordnet ist,
**dadurch gekennzeichnet, dass**
im zentralen Anzeigebereich (3) die Informationen mit einer größeren Informationstiefe dargestellt sind als die Informationen im Nebenbereich (4, 5), wobei von mindestens einer Information die größere Informationstiefe im zentralen Bereich (3) eine zeitlich aufgelöste Darstellung einer Messgröße und die geringere Informationstiefe im Nebenbereich (4, 5) eine Darstellung eines Momentanwertes der Messgröße ist, wobei durch das mindestens eine Eingabemittel die Informationen vom Nebenbereich (4, 5) in den zentralen Anzeigebereich (3) verschiebbar sind, wo diese dann mit einer größeren Informationstiefe dargestellt sind, wobei die zuvor im zentralen Anzeigebereich (3) dargestellten Informationen in den oder einen anderen Nebenbereich (4, 5) verschoben werden, wo diese mit einer geringeren Informationstiefe dargestellt sind, wobei mindestens eine Information Emissionswerte eines Kraftfahrzeuges und/oder Verbrauchs- und/oder Reichweitedaten sind.

2. Anzeigeeinheit nach Anspruch 1, **dadurch gekennzeichnet, dass** mindestens eine Information Daten eines Navigationssystems sind, wobei die Daten im zentralen Anzeigebereich (3) als digitale Straßenkarte dargestellt sind und im Nebenbereich (4, 5) nur piktogrammförmig und/oder alphanumerisch die nächste Fahrtrichtungsänderung angezeigt ist.

3. Anzeigeeinheit nach einem der vorangegangenen Ansprüche, **dadurch gekennzeichnet, dass** die Darstellung im zentralen Anzeigebereich (3) grafisch ist.

4. Anzeigeeinheit nach Anspruch 3, **dadurch gekennzeichnet, dass** zusätzlich alphanumerische Zusatzangaben im zentralen Anzeigebereich (3) dargestellt sind.

5. Anzeigeeinheit nach Anspruch 4, **dadurch gekennzeichnet, dass** mindestens ein Minimalwert und/oder ein Maximalwert und/oder ein Durchschnittswert im zentralen Anzeigebereich (3) dargestellt sind.

6. Anzeigeeinheit nach einem der vorangegangenen Ansprüche, **dadurch gekennzeichnet, dass** die Verschiebung der Informationen von einem Nebenbereich (4, 5) in den zentralen Anzeigebereich (3) einen räumlichen Eindruck aufweist.

7. Anzeigeeinheit nach einem der vorangegangenen Ansprüche, **dadurch gekennzeichnet, dass** die Anzeigeeinheit (1) Bestandteil eines Kombünstrumentes ist.

8. Anzeigeeinheit nach einem der vorangegangenen Ansprüche, **dadurch gekennzeichnet, dass** das Eingabemittel als Schaltmittel und/oder als Spracherkennungseinrichtung ausgebildet ist.

9. Anzeigeeinheit nach einem der vorangegangenen Ansprüche, **dadurch gekennzeichnet, dass** die Anzeigeeinheit (1) als Touch-Screen ausgebildet ist.

10. Verfahren zur Ansteuerung einer Anzeigeeinheit 1 für ein Kraftfahrzeug, mittels einer Anzeigeeinheit 1 und mindestens einem Eingabemittel, wobei die Anzeigeeinheit 1 einen zentralen Anzeigebereich 3 sowie mindestens einen weiteren Nebenbereich 4, 5 umfasst, wobei im zentralen Anzeigebereichh 3 und im Nebenbereich 4, 5 voneinander unabhängige Informationen darstellbar sind,
**dadurch gekennzeichnet, dass**
im zentralen Anzeigebereich (3) die Informationen mit einer größeren Informationstiefe dargestellt werden als die Informationen im Nebenbereich (4, 5), wobei von mindestens einer Information die größere Informationstiefe im zentralen Anzeigebereich (3) eine zeitlich aufgelöste Darstellung einer Messgröße und die geringere Informationstiefe im Nebenbereich (4, 5) eine Darstellung eines Momentanwertes der Messgröße ist, wobei durch das mindestens eine Eingabemittel die Informationen im Nebenbereich (4, 5) in den zentralen Anzeigebereich (3) verschoben werden, wo diese dann mit einer größeren Informationstiefe dargestellt werden, wobei die zuvor im zentralen Anzeigebereich (3) dargestellten Informationen in den oder einen anderen Nebenbereich (4, 5) verschoben werden, wo diese mit einer geringeren Informationstiefe dargestellt werden, wobei mindestens eine Information Emissionswerte eines Kraftfahrzeuges und/oder Verbrauchs- und/oder Reichweitedaten sind.

11. Verfahren nach Anspruch 10, **dadurch gekennzeichnet, dass** mindestens eine Information Daten eines Navigationssystems sind, wobei die Daten im zentralen Anzeigebereich (3) als digitale Straßenkarte dargestellt sind und im Nebenbereich (4, 5) nur piktogrammförmig und/oder alphanumerisch die nächste Fahrtrichtungsänderung angezeigt wird.

## Claims

1. Display unit (1) for a motor vehicle, comprising a central display area (3) and at least one further secondary area (4, 5), wherein information items which are independent of one another can be displayed in the central display area (3) and in the secondary area (4, 5), wherein at least one input means is assigned to the display unit (1),
**characterized in that**
in the central display area (3) the information items are represented with a greater information depth than the information items in the secondary area (4, 5), wherein the greater information depth of at least one information item in the central area (3) is a chronologically resolved display of a measurement variable and the lesser information depth in the secondary area (4, 5) is a display of an instantaneous value of the measurement variable, wherein the at least one input means can move the information items from the secondary area (4, 5) into the central display area (3) where said information items are then displayed with a greater information depth, wherein the information items previously displayed in the central display area (3) are moved into the one or another secondary area (4, 5) where said information items are displayed with a lesser information depth, wherein at least one information item comprises emission values of a motor vehicle and/or consumption data and/or range data.

2. Display unit according to Claim 1, **characterized in that** at least one information item comprises data of a navigation system, wherein the data in the central display area (3) are displayed as a digital road map, and the next change in direction of travel is displayed in the secondary area (4, 5) only in the form of a pictogram and/or alphanumerically.

3. Display unit according to one of the preceding claims, **characterized in that** the display in the central display area (3) is graphic.

4. Display unit according to Claim 3, **characterized in that** alphanumeric additional data are additionally displayed in the central display area (3).

5. Display unit according to Claim 4, **characterized in that** at least one minimum value and/or one maximum value or an average value are displayed in the central display area (3).

6. Display unit according to one of the preceding claims, **characterized in that** the movement of the information items from a secondary area (4, 5) into the central display area (3) gives a spatial impression.

7. Display unit according to one of the preceding claims, **characterized in that** the display unit (1) is a component of a combination instrument.

8. Display unit according to one of the preceding claims, **characterized in that** the input means is embodied as a switching means and/or as a voice recognition device.

9. Display unit according to one of the preceding claims, **characterized in that** the display unit (1) is embodied as a touch screen.

10. Method for controlling a display unit (1) for a motor vehicle, by means of a display unit (1) and at least one input means, wherein the display unit (1) comprises a central display area (3) and at least one further secondary area (4, 5), wherein information items which are independent of one another can be displayed in the central display area (3) and in the secondary area (4, 5),
**characterized in that**
in the central display area (3) the information items are represented with a greater information depth than the information items in the secondary area (4, 5), wherein the greater information depth of at least one information item in the central area (3) is a chronologically resolved display of a measurement variable and the lesser information depth in the secondary area (4, 5) is a display of an instantaneous value of the measurement variable, wherein the at least one input means can move the information items from the secondary area (4, 5) into the central display area (3) where said information items are then displayed with a greater information depth, wherein the information items previously displayed in the central display area (3) are moved into the one or another secondary area (4, 5) where said information items are displayed with a lesser information depth, wherein at least one information item comprises emmision values of a motor vehicle and/or consumption data and/or range data.

11. Method according to Claim 10, **characterized in that** at least one information item comprises data of a navigation system, wherein the data in the central display area (3) are displayed as a digital road map, and the next change in direction of travel is displayed in the secondary area (4, 5) only in the form of a pictogram and/or alphanumerically.

## Revendications

1. Unité d'affichage (1) pour un véhicule automobile, comprenant une zone d'affichage centrale (3) ainsi qu'au moins une autre zone secondaire (4, 5), des informations indépendantes les unes des autres pouvant être représentées dans la zone d'affichage centrale (3) et dans la zone secondaire (4, 5), au moins un moyen de saisie étant associé à l'unité d'affichage (1), **caractérisée en ce que** les informations sont représentées dans la zone d'affichage centrale (3) avec une plus grande profondeur d'information que les informations se trouvant dans la zone secondaire (4, 5), la plus grande profondeur d'information de la zone centrale (3) étant une représentation instantanée d'une grandeur de mesure et la profondeur d'information plus réduite de la zone secondaire (4, 5) étant une représentation d'une valeur momentanée de la grandeur de mesure pour au moins une information, les informations pouvant être déplacées de la zone secondaire (4, 5) dans la zone d'affichage centrale (3) par l'au moins un moyen de saisie, lesdites informations y étant alors représentées avec une plus grande profondeur d'information, les informations précédemment représentées dans la zone d'affichage centrale (3) étant déplacées dans une zone secondaire (4, 5) ou l'autre, lesdites informations y étant alors représentées avec une profondeur d'information plus limitée, au moins une information correspondant à des valeurs d'émission d'un véhicule automobile et/ou à ses données de consommation et/ou d'autonomie.

2. Unité d'affichage selon la revendication 1, **caractérisée en ce qu'**au moins une information correspond à des données d'un système de navigation, les données affichées dans la zone d'affichage centrale (3) étant représentées sous la forme d'un plan numérique et le changement de direction suivant n'étant affiché dans la zone secondaire (4, 5) que sous la forme d'un pictogramme et/ou sous forme alphanumérique.

3. Unité d'affichage selon l'une quelconque des revendications précédentes, **caractérisée en ce que** la représentation prend une forme graphique dans la zone d'affichage centrale (3).

4. Unité d'affichage selon la revendication 3, **caractérisée en ce que** des indications alphanumériques supplémentaires sont représentées en plus dans la zone d'affichage centrale (3).

5. Unité d'affichage selon la revendication 4, **caractérisée en ce qu'**au moins une valeur minimale et/ou une valeur maximale et/ou une valeur moyenne sont représentées dans la zone d'affichage centrale (3).

6. Unité d'affichage selon l'une quelconque des revendications précédentes, **caractérisée en ce que** le déplacement des informations d'une zone secondaire (4, 5) dans la zone d'affichage centrale (3) donne une impression en 3D.

7. Unité d'affichage selon l'une quelconque des revendications précédentes, **caractérisée en ce que** l'unité d'affichage (1) fait partie intégrante d'un tableau de bord.

8. Unité d'affichage selon l'une quelconque des revendications précédentes, **caractérisée en ce que** le moyen de saisie est réalisé sous la forme d'un moyen de changement de vitesse et/ou d'un dispositif de reconnaissance vocale.

9. Unité d'affichage selon l'une quelconque des revendications précédentes, **caractérisée en ce que** l'unité d'affichage (1) est réalisée sous la forme d'un écran tactile.

10. Procédé de commande d'une unité d'affichage (1) pour un véhicule automobile, à l'aide d'une unité d'affichage (1) et d'au moins un moyen de saisie, l'unité d'affichage (1) comprenant une zone d'affichage centrale (3) ainsi qu'au moins une autre zone secondaire (4, 5), des informations indépendantes les unes des autres pouvant être représentées dans la zone d'affichage centrale (3) et dans la zone secondaire (4, 5), **caractérisée en ce que** les informations sont représentées avec une plus grande profondeur d'information dans la zone d'affichage centrale (3) que les informations affichées dans la zone secondaire (4, 5), la plus grande profondeur d'information observée dans la zone d'affichage centrale (3) étant une représentation instantanée d'une grandeur de mesure et la profondeur d'information plus réduite observée dans la zone secondaire (4, 5) étant une représentation d'une valeur momentanée de la grandeur de mesure pour au moins une information, les informations affichées dans la zone secondaire (4, 5) pouvant être déplacées dans la zone d'affichage centrale (3) par l'au moins un moyen de saisie, lesdites informations y étant alors représentées avec une plus grande profondeur d'information, les informations précédemment représentées dans la zone d'affichage centrale (3) étant déplacées dans une zone secondaire (4, 5) ou l'autre, lesdites informations y étant représentées avec une profondeur d'information plus limitée, l'au moins une information correspondant aux valeurs d'émission d'un véhicule automobile et/ou à ses données de consommation et/ou d'autonomie.

11. Procédé selon la revendication 10, **caractérisé en ce qu'**au moins une information correspond aux données d'un système de navigation, les données affichées dans la zone d'affichage centrale (3) étant représentées sous la forme d'un plan numérique et le changement de direction suivant n'étant affiché dans la zone secondaire (4, 5) que sous la forme d'un pictogramme et/ou sous forme alphanumérique.
